# EUROPÄISCHE PATENTSCHRIFT

(11) **EP 3 833 580 B1**
(45) Veröffentlichungstag und Bekanntmachung des Hinweises auf die Patenterteilung: **12.07.2023**
(21) Anmeldenummer: 19755555.0
(22) Anmeldetag: 05.08.2019
(51) Int. Cl.: B60R 21/215, B60R 21/2165

(54) **ABDECKKAPPE FÜR EIN GASSACKMODUL SOWIE GASSACKMODUL MIT EINER SOLCHEN ABDECKKAPPE**
COVERING CAP FOR AN AIRBAG MODULE AND AIRBAG MODULE HAVING SUCH A COVERING CAP
CAPOT DE COUVERTURE POUR UN MODULE DE COUSSIN À GAZ AINSI QUE MODULE DE COUSSIN À GAZ COMPRENANT UN TEL CAPOT DE COUVERTURE

(30) Priorität: 09.08.2018 DE 202018104587 U
(43) Veröffentlichungstag der Anmeldung: 16.06.2021
(73) Patentinhaber: Dalphi Metal España, S.A., 36213 Vigo (ES)
(72) Erfinder: JONIETZ, Andreas, Joachim, Maria, 36204 Vigo (ES); BARANDELA IGLESIAS, Luis, 36205 Vigo (ES); GONZÁLEZ HORTA, Victor, José, 36208 Vigo (ES); PEREIRO COTO, Pedro, 36400 O Porrino (ES)
(74) Vertreter: ZF Patentabteilung - DIPS
(86) Internationale Anmeldenummer: PCT/EP2019/071020
(87) Internationale Veröffentlichungsnummer: WO 2020/030588

(56) Entgegenhaltungen:
- WO-A1-2015/144313
- DE-A1- 19 929 762
- JP-A- H05 139 231
- US-A1- 2001 038 195
- US-A1- 2009 058 055

## Beschreibung

Die Erfindung betrifft eine Abdeckkappe für ein Gassackmodul, insbesondere für ein Fahrergassackmodul, mit den Merkmalen aus dem Oberbegriff des Anspruchs 1 sowie ein Gassackmodul für ein Fahrzeuginsassen-Rückhaltesystem mit einer solchen Abdeckkappe.

Fahrergassackmodule sind üblicherweise im Nabenbereich eines Fahrzeuglenkrads untergebracht und umfassen in der Regel eine dem Insassen zugewandte Modulabdeckung mit einem an der Modulabdeckung befestigten Emblem. Unter einem Emblem ist in diesem Zusammenhang beispielsweise ein Logo des Fahrzeugherstellers, ein Schriftzug und/oder ein sonstiges Zierelement zu verstehen, welches an der Abdeckkappe des Gassackmoduls angebracht ist.

Aus dem Stand der Technik sind zahlreiche Embleme bekannt, die auf eine dem Insassen zugewandte Außenseite der Abdeckkappe aufgesetzt und dort fest und zuverlässig fixiert sind, sodass sie sich bei einer Aktivierung des Gassackmoduls nicht von einer Frontwand der Abdeckkappe lösen.

Beispielsweise zeigt die gattungsgemäße JP H05-139231 A bereits eine Abdeckkappe mit den Merkmalen aus dem Oberbegriff des Anspruchs 1, wobei das Emblem besonders zuverlässig an der Abdeckkappe befestigt sein soll.

Um bei einer Aktivierung des Gassackmoduls ein definiertes, reproduzierbares Entfaltungsverhalten des Gassacks zu erreichen, weist die Frontwand der Abdecckappe gewöhnlich eine sogenannte Reißlinie auf, d.h. eine Schwächungszone, an der die Frontwand bei einer Druckbeaufschlagung kontrolliert aufreißt. Durch diese Reißlinie werden klappenartig schwenkbare Frontwandabschnitte definiert, welche das Austreten und Entfalten des Gassacks in Richtung zum Insassen ermöglichen. Üblicherweise ist die Reißlinie dabei um das Emblem herumgeführt, sodass das Emblem sicher an einem der klappenartigen Frontwandabschnitt befestigt bleibt.

Neben der Sicherstellung eines reduzierten Entfaltungswiderstands sowie eines definierten Entfaltungsverhaltens des Gassacks, muss die Reißlinie allerdings auch hinreichend widerstandsfähig sein, um zum Beispiel bei einer Hupenbetätigung im normalen Fahrbetrieb nicht unbeabsichtigt aufzureißen. Darüber hinaus soll die Reißlinie der Abdeckkappe für den Insassen nicht erkennbar sein.

Aufgabe der Erfindung ist es, eine mit geringem Aufwand herstellbare Abdecckappe zu schaffen, welche im normalen Fahrbetrieb hinreichend robust ist, im Auslösefall des Gassackmoduls ein definiertes Entfaltungsverhalten des Gassacks gewährleistet und darüber hinaus große Gestaltungsfreiheiten bei der Emblemkonstruktion erlaubt.

Erfindungsgemäß wird diese Aufgabe gelöst durch eine Abdeckkappe für ein Gassackmodul nach Anspruch 1, insbesondere für ein Fahrergassackmodul, mit einer Frontwand, umfassend eine Außenseite sowie eine entgegengesetzte Innenseite, welche im zusammengesetzten Zustand des Gassackmoduls einem gefalteten Gassackpaket zugewandt ist, und mit einem Emblem, das innenseitig an der Frontwand angeordnet und befestigt ist, wobei die Frontwand im Bereich des Emblems eine Emblemöffnung aufweist, durch die das Emblem von der Außenseite der Frontwand sichtbar ist, wobei die Frontwand eine Reißlinie aufweist, an der die Abdeckkappe bei einer Aktivierung des zusammengebauten Gassackmoduls aufreißt, und wobei die Reißlinie an einem Randpunkt der Emblemöffnung in die Emblemöffnung mündet. Mit anderen Worten grenzt die Reißlinie unmittelbar an die Emblemöffnung an bzw. geht in diese über, wobei die Reißlinie insbesondere im Wesentlichen senkrecht auf den Rand der Emblemöffnung trifft. Folglich werden bei dieser rückseitigen oder innenseitigen Montage des Emblems die Emblemöffnungen in vorteilhafter Weise in die Öffnungs- oder Aufreißlinie integriert. Die Randpunkte, an denen die Emblemöffnungen in die Reißlinie übergehen bilden bei der Druckbeaufschlagung nach einer Aktivierung des Gassackmoduls die Startpunkte für das Aufreißen der Abdeckkappe. Da die Emblemöffnungen bevorzugt recht zentral in der Frontwand vorgesehen sind, ergibt sich ohne zusätzlichen Fertigungsaufwand ein Aufreißverhalten der Abdeckkappe "von innen nach außen", aus dem wiederum ein besonders vorteilhaftes Entfaltungsverhalten des Gassacks resultiert.

Gemäß einer Ausführungsform der Abdeckkappe ist die Reißlinie durch eine an der Innenseite der Frontwand vorgesehene Wandvertiefung gebildet, insbesondere durch eine lineare, muldenförmige Wandvertiefung oder Einkerbung. Auf diese Weise ist die Reißlinie für einen Fahrzeuginsassen nicht erkennbar.

Vorzugsweise ist die Reißlinie durch die Emblemöffnung unterbrochen und mündet an zwei voneinander beabstandeten, insbesondere gegenüberliegenden Randpunkten der Emblemöffnung in die Emblemöffnung. Ausgehend von einer insbesondere zentral gelegenen Emblemöffnung reißt die Frontwand dann von innen nach außen im Wesentlichen symmetrisch auf, was wiederum zu einem vorteilhaften Entfaltungsverhalten des Gassacks beiträgt.

Erfindungsgemäß weist die Abdeckkappe zwei voneinander beabstandete, separate Emblemöffnungen auf, welche durch einen Verbindungsabschnitt der Reißlinie miteinander verbunden sind. Der Verbindungsabschnitt der Reißlinie mündet somit an einem Ende in die eine der beiden Emblemöffnungen und am entgegengesetzten Ende in die andere der beiden Emblemöffnungen.

Alternativ oder zusätzlich ist das Emblem der Abdeckkappe zweiteilig ausgeführt und weist zwei voneinander beabstandete, separate Emblemelemente auf, wobei jedem Emblemelement jeweils eine separate Emblemöffnung zugeordnet ist.

Bevorzugt weist die Frontwand hierbei im Bereich der Reißlinie eine Wandschwächung und eine verbleibende Restwandstärke auf, wobei die Frontwand im Bereich des Verbindungsabschnitts der Reißlinie eine Restwandstärke aufweist, die größer ist als eine Restwandstärke außerhalb dieses Verbindungsabschnitts. Im normalen Fahrbetrieb des Kraftfahrzeugs hat sich herausgestellt, dass die Abdeckkappe im Bereich des zumeist zentral gelegenen und vergleichsweise kurzen Verbindungsabschnitts besonders hoch beansprucht ist, beispielsweise bei einer Betätigung der Fahrzeughupe. Durch die größere Restwandstärke im Bereich des Verbindungsabschnitts wird auf einfache Art und Weise ein unbeabsichtigtes Aufreißen der Frontwand im normalen Fahrbetrieb zuverlässig verhindert, ohne den Entfaltungswiderstand der Abdeckkappe bei einer Aktivierung des Gassackmoduls übermäßig zu erhöhen.

Vorzugsweise ist die Reißlinie der Frontwand in etwa H-förmig ausgebildet und weist zwei gegenüberliegende Randabschnitte auf, sowie einen Zentralabschnitt, der sich durch einen zentralen Bereich der Frontwand erstreckt und die Randabschnitte verbindet, wobei die Reißlinie im Bereich ihres Zentralabschnitts durch wenigstens eine Emblemöffnung unterbrochen ist.

An der Innenseite der Frontwand können angrenzend an das Emblem oder um das Emblem herum Versteifungsrippen vorgesehen, insbesondere einstückig angeformt sein. Diese Versteifungsrippen sorgen im Bereich des Emblems für eine geringere Verformbarkeit der Frontwand. Durch diese Versteifung im zentralen Bereich der Frontwand wird die Wahrscheinlichkeit, dass die Reißlinie etwa bei einer Hupenbetätigung im normalen Fahrbetrieb unbeabsichtigt aufreißt, minimiert.

Ferner können an der Innenseite der Frontwand mehrere Zapfen zur Befestigung des Emblems vorgesehen, insbesondere einstückig angeformt sein. Dadurch lässt sich das Emblem mit geringem Aufwand schnell und zuverlässig an der Abdeckkappe befestigen. Die Zapfen sind beispielsweise Schmelzzapfen, die in zugeordnete Ausnehmungen des Emblems eingreifen sowie anschließend erwärmt und verformt werden. Alternativ sind auch Rastzapfen denkbar, welche in den Emblemausnehmungen verrasten.

Die Erfindung betrifft im Übrigen auch ein Gassackmodul für ein Fahrzeuginsassen-Rückhaltesystem, mit einem Modulgehäuse, das eine oben beschriebene Abdeckkappe umfasst, einem Gassack, der bei deaktiviertem Gassackmodul als gefaltetes Gassackpaket im Modulgehäuse aufgenommen ist, und einem Gasgenerator zum Aufblasen des Gassacks bei einer Aktivierung des Gassackmoduls.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine perspektivische Explosionsansicht einer erfindungsgemäßen Abdeckkappe mit zweiteiligem Emblem;
- Figur 2 eine Ansicht einer Innenseite der Abdeckkappe gemäß Figur 1 vor einer Montage des Emblems;
- Figur 3 eine perspektivische Ansicht der Abdeckkappe gemäß Figur 1 nach einer Montage des Emblems;
- Figur 4 eine Ansicht einer Außenseite der Abdeckkappe gemäß Figur 1 nach einer Montage des Emblems;
- Figur 5 eine Ansicht einer Innenseite der Abdeckkappe gemäß Figur 1 nach einer Montage des Emblems sowie mehrere Schnittdetails der Abdeckkappe; und
- Figur 6 einen schematischen Schnitt durch ein erfindungsgemäßes Gassackmodul mit einer erfindungsgemäßen Abdeckkappe.

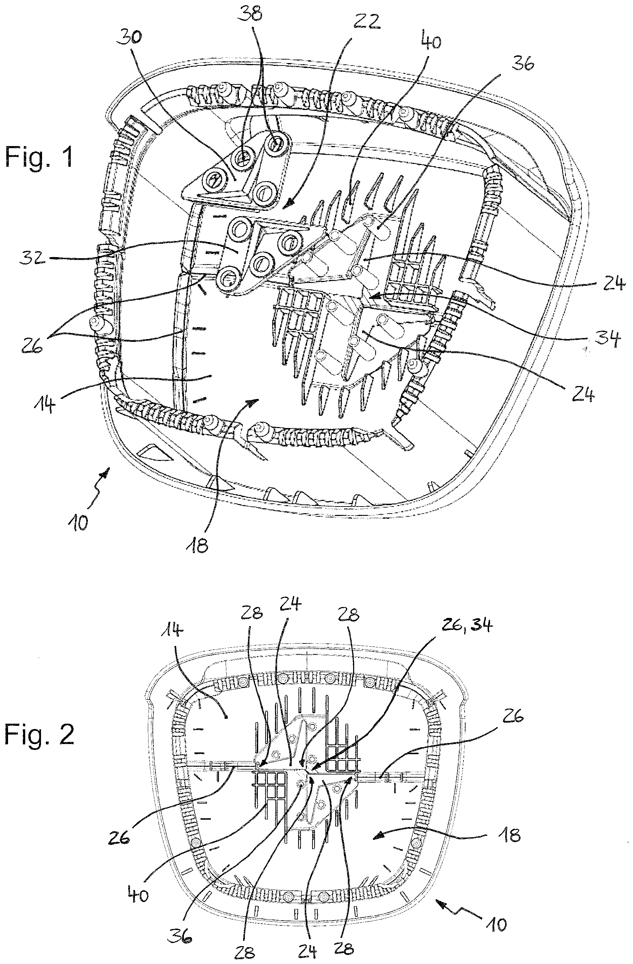

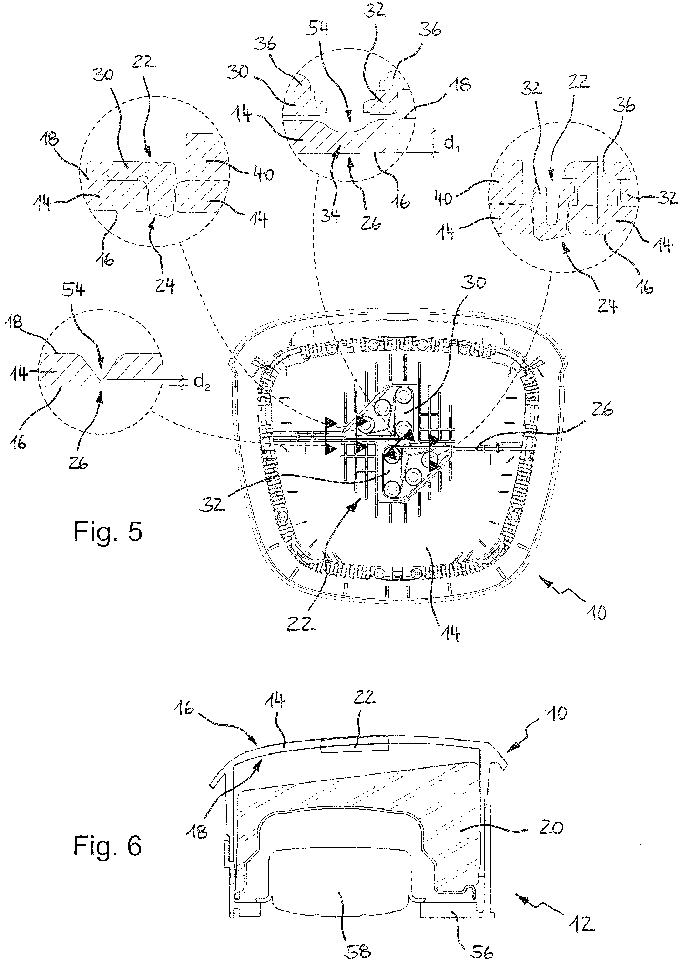

Die Figuren 1 bis 5 zeigen eine Abdeckkappe 10 eines in Figur 6 schematisch dargestellten Gassackmoduls 12, mit einer Frontwand 14, umfassend eine Außenseite 16 sowie eine entgegengesetzte Innenseite 18, welche im zusammengesetzten Zustand des Gassackmoduls 12 einem gefalteten Gassack 20 zugewandt ist, und mit einem Emblem 22, das innenseitig an der Frontwand 14 angeordnet und befestigt ist. Die Frontwand 14 weist im Bereich des Emblems 22 eine Emblemöffnung 24 auf, durch die das Emblem 22 von der Außenseite 16 der Frontwand 14 sichtbar ist, wobei die Frontwand 14 eine Reißlinie 26 aufweist, an der die Abdeckkappe 10 bei einer Aktivierung des zusammengebauten Gassackmoduls 12 aufreißt, und wobei die Reißlinie 26 an einem Randpunkt 28 der Emblemöffnung 24 in die Emblemöffnung 24 mündet. Mit anderen Worten grenzt die Reißlinie 26 unmittelbar an die Emblemöffnung 24 an bzw. geht in diese über.

Anhand der Figur 1 ist gut zu erkennen, dass das Emblem 22 in der vorliegenden Ausführungsvariante der Abdeckkappe 10 zweiteilig ausgeführt ist und zwei voneinander beabstandete, separate Emblemelemente 30, 32 aufweist, denen hier jeweils eine Emblemöffnung 24 zugeordnet ist.

In der Frontwand 14 der Abdeckkappe 10 sind folglich zwei voneinander beabstandete, separate Emblemöffnungen 24 vorgesehen, welche durch einen Verbindungsabschnitt 34 der Reißlinie 26 miteinander verbunden sind. Dieser Verbindungsabschnitt 34 mündet also an seinem einen Ende in die eine der beiden Emblemöffnungen 24 und an seinem entgegengesetzten Ende in die andere der beiden Emblemöffnungen 24.

Die Figur 2 zeigt eine Innenansicht der Abdeckkappe 10 ohne die Emblemelemente 30, 32. Es wird deutlich, dass die Reißlinie 26 durch die beiden Emblemöffnungen 24 unterbrochen ist und an zwei etwa gegenüberliegenden Randpunkten 28 jeder Emblemöffnung 24 in die jeweilige Emblemöffnung 24 mündet.

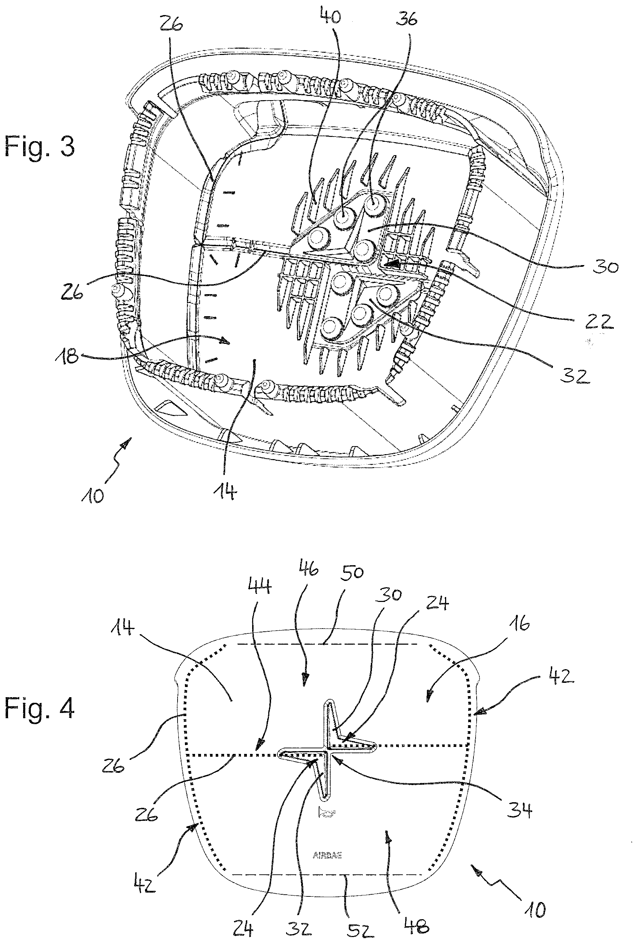

An der Innenseite 18 der Frontwand 14 sind mehrere Zapfen 36 zur Befestigung des Emblems 22 vorgesehen, insbesondere einstückig angeformt. Diese Zapfen 36 sind im dargestellten Ausführungsbeispiel Schmelzzapfen, welche bei der Montage des Emblems 22 in zugeordnete Ausnehmungen 38 der Emblemelemente 30, 32 eingreifen und dann unter Zufuhr von Wärmeenergie plastisch verformt werden. Durch die plastische Verformung werden die Schmelzzapfen an ihren freien Enden aufgeweitet und überlappen die Ränder der zugeordneten Ausnehmungen 38 (siehe Figur 3), sodass das Emblem 22 schließlich fest und zuverlässig an der Frontwand 14 fixiert ist. Statt als Schmelzzapfen können die Zapfen 36 selbstverständlich auch als Rastzapfen ausgeführt sein und mit den Emblemelementen 30, 32 verrasten.

Gemäß Figur 3 sind an der Innenseite 18 der Frontwand 14 mehrere Versteifungsrippen 40 vorgesehen, welche insbesondere einstückig an die Abdecckappe 10 angeformt sind. Diese Versteifungsrippen 40 grenzen an das Emblem 22 an und sind insbesondere in einem zentralen Bereich der Frontwand 14 um das Emblem 22 herum angeordnet. Auf diese Weise wird die Verformbarkeit des zentralen Frontwandbereichs verringert und das Material der Abdeckkappe 10, zum Beispiel bei einer Hupenbetätigung, weniger beansprucht. Dementsprechend lässt sich über die Lebensdauer des Gassackmoduls 12 ein unbeabsichtigtes Aufplatzen der Reißlinie 26, insbesondere im Bereich des Verbindungsabschnitts 34, bei üblicher Alltagsnutzung weitgehend ausschließen.

Die Figur 4 zeigt eine Außenansicht der Abdeckkappe 10 gemäß Figur 3, wobei das Emblem 22 bzw. die Emblemelemente 30, 32 auf der Außenseite 16 der Frontwand 14 durch die Emblemöffnungen 24 hindurch sichtbar sind. Ferner ist in Figur 4 eine Öffnungslinie der Abdeckkappe 10 durch eine Punktlinie angedeutet, wobei sich die Öffnungslinie aus der Reißlinie 26 und Abschnitten der Emblemöffnungen 24 zusammensetzt.

Die Reißlinie 26 der Frontwand 14 ist in etwa H-förmig ausgebildet und weist zwei gegenüberliegende Randabschnitte 42 auf, sowie einen Zentralabschnitt 44, der sich durch einen zentralen Bereich der Frontwand 14 erstreckt und die Randabschnitte 42 verbindet, wobei die Reißlinie 26 im Bereich ihres Zentralabschnitts 44 durch die Emblemöffnungen 24 unterbrochen ist.

Bei einer Aktivierung des Gassackmoduls 12 werden durch die Öffnungslinie klappenartig schwenkbare Frontwandabschnitte 46, 48 definiert, welche das Austreten und Entfalten des Gassacks 20 in Richtung zum Insassen ermöglichen. Gemäß Figur 4 entsteht ein oberer Frontwandabschnitt 46, der um ein gestrichelt angedeutetes Abdeckkappenscharnier 50 nach oben schwenkt, und ein unterer Frontwandabschnitt 48, der um ein gestrichelt angedeutetes Abdeckkappenscharnier 52 nach unten schwenkt.

Die Figur 5 zeigt eine Innenansicht der Abdeckkappe 10 gemäß Figur 3 sowie mehrere Schnittdetails im Bereich der Öffnungs- bzw. Reißlinie 26. Dabei wird deutlich, dass die Frontwand 14 im Bereich der Reißlinie 26 eine Wandschwächung und eine verbleibende Restwandstärke d₁, d₂ aufweist, wobei die Frontwand 14 im Bereich des Verbindungsabschnitts 34 der Reißlinie 26 zwischen den beiden Emblemöffnungen 24 eine Restwandstärke d₁ aufweist, die größer ist als eine Restwandstärke d₂ außerhalb dieses Verbindungsabschnitts 34. Dadurch wird auf einfache Art und Weise ein unbeabsichtigtes Aufreißen der Reißlinie 26 im Bereich des bei einer Hupenbetätigung relativ hoch beanspruchten Verbindungsabschnitts 34 besonders zuverlässig verhindert.

Die Wandschwächung der Frontwand 14 im Bereich der Reißlinie 26 ist in der dargestellten Ausführungsvariante durch eine an der Innenseite 18 der Frontwand 14 vorgesehene Wandvertiefung 54 gebildet. Folglich ist die Reißlinie für einen Insassen auf der Außenseite 16 der Frontwand 14 nicht erkennbar.

Die Figur 6 zeigt schließlich einen schematischen Schnitt des Gassackmoduls 12 für ein Fahrzeuginsassen-Rückhaltesystem, mit einem Modulgehäuse 56, das eine oben beschriebene Abdeckkappe 10 umfasst, einem Gassack 20, der bei deaktiviertem Gassackmodul 12 als gefaltetes Gassackpaket im Modulgehäuse 56 aufgenommen ist, und einem Gasgenerator 58 zum Aufblasen des Gassacks 20 bei einer Aktivierung des Gassackmoduls 12.

Das dargestellte Gassackmodul 12 ist hier als Fahrergassackmodul ausgeführt und nach seiner Montage im Nabenbereich eines Fahrzeuglenkrads angeordnet.

## Patentansprüche

1. Abdeckkappe für ein Gassackmodul (12), insbesondere für ein Fahrergassackmodul, mit
einer Frontwand (14), umfassend eine Außenseite (16) sowie eine entgegengesetzte Innenseite (18), welche im zusammengesetzten Zustand des Gassackmoduls (12) einem gefalteten Gassack (20) zugewandt ist, und
einem Emblem (22), das innenseitig an der Frontwand (14) angeordnet und befestigt ist,
wobei die Frontwand (14) im Bereich des Emblems (22) eine Emblemöffnung (24) aufweist, durch die das Emblem (22) von der Außenseite (16) der Frontwand (14) sichtbar ist,
wobei die Frontwand (14) eine Reißlinie (26) aufweist, an der die Abdeckkappe (10) bei einer Aktivierung des zusammengebauten Gassackmoduls (12) aufreißt, und
wobei die Reißlinie (26) an einem Randpunkt (28) der Emblemöffnung (24) in die Emblemöffnung (24) mündet, **dadurch gekennzeichnet,**
**dass** zwei voneinander beabstandete, separate Emblemöffnungen (24) vorgesehen sind, welche durch einen Verbindungsabschnitt (34) der Reißlinie (26) miteinander verbunden sind, und/oder
**dass** das Emblem (22) zweiteilig ausgeführt ist und zwei voneinander beabstandete, separate Emblemelemente (30,32) aufweist, wobei jedem Emblemelement (30,32) jeweils eine separate Emblemöffnung (24) zugeordnet ist.

2. Abdeckkappe nach Anspruch 1, **dadurch gekennzeichnet, dass** die Reißlinie (26) durch eine an der Innenseite (18) der Frontwand (14) vorgesehene Wandvertiefung (54) gebildet ist.

3. Abdeckkappe nach Anspruch 1 oder 2, **dadurch gekennzeichnet, dass** die Reißlinie (26) durch die Emblemöffnung (24) unterbrochen ist und an zwei voneinander beabstandeten Randpunkten (28) der Emblemöffnung (24) in die Emblemöffnung (24) mündet.

4. Abdeckkappe nach wenigstens einem der vorhergehenden Ansprüche, **dadurch gekennzeichnet, dass** die Frontwand (14) im Bereich der Reißlinie (26) eine Wandschwächung und eine verbleibende Restwandstärke (d₁, d₂) aufweist, wobei die Frontwand (14) im Bereich des Verbindungsabschnitts (34) der Reißlinie (26) eine Restwandstärke (d₁) aufweist, die größer ist als eine Restwandstärke (d₂) außerhalb dieses Verbindungsabschnitts (34).

5. Abdeckkappe nach wenigstens einem der vorhergehenden Ansprüche, **dadurch gekennzeichnet, dass** die Reißlinie (26) der Frontwand (14) in etwa H-förmig ausgebildet ist und zwei gegenüberliegende Randabschnitte (42) aufweist sowie einen Zentralabschnitt (44), der sich durch einen zentralen Bereich der Frontwand (14) erstreckt und die Randabschnitte (42) verbindet, wobei die Reißlinie (26) im Bereich des Zentralabschnitts (44) durch wenigstens eine Emblemöffnung (24) unterbrochen ist.

6. Abdeckkappe nach wenigstens einem der vorhergehenden Ansprüche, **dadurch gekennzeichnet, dass** an der Innenseite (18) der Frontwand (14), angrenzend an das Emblem (22), Versteifungsrippen (40) vorgesehen, insbesondere einstückig angeformt sind.

7. Abdeckkappe nach wenigstens einem der vorhergehenden Ansprüche, **dadurch gekennzeichnet, dass** an der Innenseite der Frontwand (14) mehrere Zapfen (36) zur Befestigung des Emblems (22) vorgesehen, insbesondere einstückig angeformt sind.

8. Gassackmodul für ein Fahrzeuginsassen-Rückhaltesystem, mit
einem Modulgehäuse (56), das eine Abdeckkappe (10) nach einem der vorhergehenden Ansprüche umfasst,
einem Gassack (20), der bei deaktiviertem Gassackmodul (12) als gefaltetes Gassackpaket im Modulgehäuse (56) aufgenommen ist, und
einem Gasgenerator (58) zum Aufblasen des Gassacks (20) bei einer Aktivierung des Gassackmoduls (12).

## Claims

1. A cover cap for an airbag module (12), especially for a driver airbag module, comprising
a front panel (14) including an outer face (16) as well as an opposed inner face (18) which in the assembled state of the airbag module (12) faces a folded airbag (20), and
an emblem (22) which is arranged and fastened at the inside of the front panel (14),
wherein in the area of the emblem (22) the front panel (14) has an emblem opening (24) through which the emblem (22) is visible from the outer face (16) of the front panel (14),
wherein the front panel (14) includes a tear line (26) along which the cover cap (10) tears upon activation of the assembled airbag module (12), and
wherein the tear line (26) opens into the emblem opening (24) at an edge point (28) of the emblem opening (24), **characterized in that**
two separate emblem openings (24) spaced apart from each other are provided which are connected to each other by a connecting portion (34) of the tear line (26), and/or
**in that** the emblem (22) is a two-part design and includes two separate emblem elements (30, 32) spaced apart from each other, wherein a separate emblem opening (24) is associated with each of the emblem elements (30, 32).

2. The cover cap according to claim 1, **characterized in that** the tear line (26) is formed by a panel recess (54) provided on the inner face (18) of the front panel (14).

3. The cover cap according to claim 1 or 2, **characterized in that** the tear line (26) is interrupted by the emblem opening (24) and at two edge points (28) of the emblem opening (24) spaced apart from each other ends in the emblem opening (24).

4. The cover cap according to at least one of the preceding claims, **characterized in that** the front panel (14) in the area of the tear line (26) includes a weakened panel and a remaining residual panel thickness (d₁, d₂), the front panel (14) exhibiting, in the area of the connecting portion (34) of the tear line (26), a residual panel thickness (d₁) which is larger than a residual panel thickness (d₂) outside said connecting portion (34).

5. The cover cap according to at least one of the preceding claims, **characterized in that** the tear line (26) of the front panel (14) is approximately H-shaped and includes two opposite edge portions (42) as well as a central portion (44) extending through a central area of the front panel (14) and connecting the edge portions (42), the tear line (26) being interrupted in the area of the central portion (44) by at least one emblem opening (24).

6. The cover cap according to at least one of the preceding claims, **characterized in that** on the inner face (18) of the front panel (14) reinforcing ribs (40) are provided, especially integrally formed, adjacent to the emblem (22).

7. The cover cap according to at least one of the preceding claims, **characterized in that** on the inner face of the front panel (14) plural pins (36) are provided, especially integrally formed, for fastening the emblem (22).

8. An airbag module for a vehicle occupant restraint system, comprising
a module housing (56) which includes a cover cap (10) according to any one of the preceding claims,
an airbag (20) which is accommodated in the module housing (56) as a folded airbag package when the airbag module (12) is deactivated, and
an inflator (58) for inflating the airbag (20) upon activation of the airbag module (12).

## Revendications

1. Couvercle pour un module airbag (12), en particulier pour un module airbag pour conducteur, avec
une paroi frontale (14), comprenant un côté extérieur (16) ainsi qu'une face intérieure (18) opposée, laquelle, à l'état assemblé du module airbag (12), est tournée vers un coussin gonflable (20) plié, et
un emblème (22) qui est disposé et fixé sur le côté intérieur de la paroi frontale (14),
pour lequel la paroi frontale (14) présente, dans la zone de l'emblème (22), une ouverture d'emblème (24) à travers laquelle l'emblème (22) est visible depuis le côté extérieur (16) de la paroi frontale (14),
pour lequel la paroi frontale (14) présente une ligne de découpe (26) au niveau de laquelle le couvercle (10) se déchire lors d'une activation du module airbag (12) assemblé, et
pour lequel la ligne de découpe (26) débouche dans l'ouverture d'emblème (24) en un point de contour (28) de l'ouverture d'emblème (24), **caractérisé en ce qu'**
il est prévu deux ouvertures d'emblème (24) séparées, espacées l'une de l'autre, qui sont reliées l'une à l'autre par une section de liaison (34) de la ligne de découpe (26), et/ou
**en ce que** l'emblème (22) est réalisé en deux parties et présente deux éléments d'emblème (30, 32) séparés et espacés l'un de l'autre, pour lequel une ouverture d'emblème (24) séparée est associée à chaque élément d'emblème (30, 32).

2. Couvercle selon la revendication 1, **caractérisé en ce que** la ligne de découpe (26) est formée par un renfoncement de paroi (54) prévu sur le côté intérieur (18) de la paroi frontale (14).

3. Couvercle selon la revendication 1 ou 2, **caractérisé en ce que** la ligne de découpe (26) est interrompue par l'ouverture d'emblème (24) et débouche dans l'ouverture d'emblème (24) en deux points de contour (28) espacés l'un de l'autre de l'ouverture d'emblème (24).

4. Couvercle selon au moins l'une des revendications précédentes, **caractérisé en ce que** la paroi frontale (14) présente, dans la zone de la ligne de découpe (26), un affaiblissement de paroi et une épaisseur de paroi résiduelle restante (d₁, d₂), pour lequel la paroi frontale (14) présente, dans la zone de la section de liaison (34) de la ligne de découpe (26), une épaisseur de paroi résiduelle (d₁) qui est supérieure à une épaisseur de paroi résiduelle (d₂) en dehors de cette section de liaison (34).

5. Couvercle selon au moins l'une des revendications précédentes, **caractérisé en ce que** la ligne de découpe (26) de la paroi frontale (14) est réalisée approximativement en forme de H et présente deux sections de contour (42) opposées ainsi qu'une section centrale (44) qui s'étend à travers une zone centrale de la paroi frontale (14) et relie les sections de bord (42), pour lequel la ligne de découpe (26) est interrompue dans la zone de la section centrale (44) par au moins une ouverture d'emblème (24).

6. Couvercle selon au moins l'une des revendications précédentes, **caractérisé en ce que** des nervures de renforcement (40) sont prévues, en particulier formées d'un seul tenant, sur la face intérieure (18) de la paroi frontale (14), à proximité de l'emblème (22).

7. Couvercle selon au moins l'une des revendications précédentes, **caractérisé en ce que** plusieurs tenons (36) sont prévus sur le côté intérieur de la paroi frontale (14) pour la fixation de l'emblème (22), en particulier formés d'une seule pièce.

8. Module airbag pour un système de retenue des occupants d'un véhicule, comprenant
un boîtier de module (56), qui comprend un couvercle (10) selon l'une des revendications précédentes,
un coussin gonflable (20) qui, lorsque le module airbag (12) est désactivé, est logé dans le boîtier de module (56) sous la forme d'un paquet de coussin gonflable plié, et
un générateur de gaz (58) pour gonfler le sac gonflable (20) lors d'une activation du module airbag (12).
